Europäisches Patentamt

European Patent Office

Office européen des brevets

(11) Publication number: **0 612 704 B1**

# EUROPEAN PATENT SPECIFICATION

(45) Date of publication of patent specification: **30.08.95**   (51) Int. Cl.[6]: **C05F 3/00**, C02F 3/34, C02F 1/66

(21) Application number: **92204115.7**

(22) Date of filing: **30.12.92**

(54) **Process for acidifying manure, in which ammonia is fixed and carbon dioxide gas is emitted.**

(43) Date of publication of application:
**31.08.94 Bulletin 94/35**

(45) Publication of the grant of the patent:
**30.08.95 Bulletin 95/35**

(84) Designated Contracting States:
**BE DE DK FR GB IE NL**

(56) References cited:
**EP-A- 0 447 291**
**DE-A- 2 535 296**
**FR-A- 685 844**

(73) Proprietor: **STA PRO ENVIRONMENT B.V.**
**Leemdijk 32**
**NL-9422 TH Smilde (NL)**

(72) Inventor: **Lameijer,Engel Frans**
**Leemdijk 32**
**9422 TH Smilde (NL)**
Inventor: **Vervoort,Kees**
**Bosakker 8**
**7854 RA Aalden (NL)**

(74) Representative: **Smulders, Theodorus A.H.J.,**
**Ir. et al**
**Vereenigde Octrooibureaux**
**Nieuwe Parklaan 97**
**NL-2587 BN 's-Gravenhage (NL)**

## Description

The invention relates to a process for acidifying manure, in particular slurry, in which the ammonia present in the manure is substantially fixed in the manure and the carbonates present in the manure are substantially emitted in the form of carbon dioxide gas.

Manure, and more particularly slurry, is produced in very large quantities at modern stock farms. Until recently, this manure was uilized practically exclusively as a soil fertilizer on agricultural lands. Over the last few years, more and more measures have been taken by the government to reduce the amount of manure annually introduced into the environment per hectare of agricultural land. The objective of these measures is to push back the detrimental environmental effects that occur if too much manure is introduced into the environment.

Accordingly, it is endeavored to find other ways of disposing of the amount of manure produced. One of the possibilities to that end is the industrial processing or drying of manure, yielding a valuable fertilizer, for instance in the form of concentrated manure pellets. Such processing has a number of advantages. In the first place, the volume of the product to be processed is reduced considerably. In addition, it is possible to control the composition of the dry manure pellets by mixing different types of manure and/or by admixing other products. Thus, a product can be produced that is useful for fertilizing applications for which slurry as such is less suitable, if at all, such as the application in horticulture. Moreover, the pellets produced can be simply transported and exported to regions where there is a great demand for fertilizers.

Before the manure is presented to a manure processing plant, it will have to be stored at the stock farm for a considerable time, for instance six weeks, in manure vaults or manure silos. During the storage of manure, a considerable amount of ammonia is generated. This ammonia is formed during the break-down of nitrogen-containing compounds, such as proteins, under the influence of microorganisms present in the manure.

The pH of slurry is generally between 7.2 and 8.2. More particularly, the pH of fresh manure is lower than the pH of older manure. At a pH in the range mentioned, the ammonia generated will be emitted into the atmosphere in the form of gas. This emission of ammonia must be prevented, not only from the point of view of environmental protection, but also to ensure the highest possible quality of the dry manure to be formed from this slurry, it being well known that ammonium ions are a very important constituent of a good fertilizer.

An obvious method of ensuring that ammonia does not escape from the manure as a gas but is fixed in the manure in the form of ammonium ions, is to add acid, in particular strong acid, so as to lower the pH of the manure.

This is for instance described in an article by Husted et al. in J. Sci. Food Agric. 57 (1991), 335-349, titled "Reducing Ammonia Loss from Cattle Slurry by the Use of Acidifying Additives: the Role of the Buffer System" and in an article by Woudstra in the Report of the Symposium "Dierlijke mest, problemen en oplossingen" ["Animal manure, problems and solutions"], Koninklijke Nederlandse Chemische Vereniging, section environmental chemistry, which symposium was held on June 13 and 14, 1990 at Utrecht, the Netherlands. According to the first-mentioned publication, ammonia volatilizes less rapidly from manure by adding hydrochloric acid or calcium chloride. The second publication relates to the acidification of manure utilizing a product consisting substantially of nitric acid.

More particularly, it is known that the emission of ammonia is reduced to practically zero when the pH of manure is adjusted to and maintained at a value between 4.5 and 5.0. If the pH of manure is adjusted to a pH value between 6.0 and 6.5, the emission of ammonia is already reduced by a factor of 5-10. Such an addition of strong acid should occur as soon as possible after the production of the manure, i.e., still at the stock farm.

A number of reasons can be given why preferably strong acid should be added. As stated, a very large amount of slurry is produced at stock farms. In order to use the capacity of manure storage spaces optimally, it will be desirable to use the smallest possible volume for any acid to be added. Further, slurry comprises approximately 90% liquid constituents, mainly water. For processing manure into dry manure, it is important to add as little supplementary liquid as possible to the slurry. If a weak acid were used, a considerably larger volume of acid would be necessary for the same pH reduction.

For 1 ton of pig slurry (approx. 3 months old) with a dry matter content of 12% and a pH of approximately 8.0 to be acidified until the pH has been lowered to 4.8, 22 kg 98% sulfuric acid must be added.

However, the addition of strong acids to manure also has some disadvantages. In addition to the health hazards involved for persons having to work with these strong acids, it is well known that strong acids have a highly corrosive effect on many materials. It must therefore be ensured that both the supply pipes and the manure storage spaces are not affected by the strong acid. Either these devices must be made of corrosion-resistant, and hence very expensive, materials, or it must be ensured that the corrosive acid does not come into contact with, for instance, the concrete or the sand-lime brick of which manure vaults are made. This last requires that the acid and manure be properly mixed, with all the cost involved. Moreover, it is known from the Woudstra article referred to that if concentrated nitric acid is used for acidifying manure, the pH of the manure may actually run up in the case of incorrect use. The reason is that there is a risk that microorganisms present in the manure will reduce the nitrate ions originating from the nitric acid. As a result, the pH runs up. This requires that the pH be checked frequently, whilst the amount of acid to be added increases considerably. In addition, the costs of acifidying in this manner are high on account of the required amounts of concentrated strong acid. Finally, it has been established experimentally that upon a rapid lowering of the pH of slurry under the influence of a strong acid, a strong foam formation occurs, which is hard to control, as a result of the release of carbon dioxide gas.

This carbon dioxide gas originates from the carbonates present in large amounts in the manure. If, during the processing of the manure, these carbonates are still present in the starting manure, they give rise to a practical problem. During the processing of the manure, one of the first steps to be carried out is a mechanical separation of the manure into a liquid phase and a solid phase. Upon subsequent evaporation of the liquid phase, carbon dioxide gas, being formed from these carbonates, will give rise to a foam formation that is hard to control.

In EP-A-0 447 291 a process is described which solves a problem which occurs in old manure that is deposited in tanks. In such tanks, a solid crust is formed at the surface of the manure and a deposit is formed at the bottom of the tanks. This problem is solved by adding a special composition comprising both bacteria and yeasts, which microorganisms are fixed to a support material containing a colloidal substance.

DE-A-2 535 296 described a process for the preparation of proteins by metabolizing manure. This process requires at least four steps comprising a fermentation under aerobic circumstances.

The object of the present invention is to provide a process for lowering the pH of slurry to a value at which ammonia is substantially fixed in the form of ammonium ions and at which the carbon dioxide is driven out gradually, and hence in a controlled manner, and maintaining this pH. To that end, it is required that the pH of fresh manure be lowered from a value of approximately 7.3-8.0 to a value lower than approximately 6.5, for instance pH 6.0, and be maintained at this value. It must be possible for this process to be carried out already at the stock farm.

The invention relates to a process for acidifying manure, in particular slurry, in which the ammonia present in the manure is substantially fixed in the manure and the carbonates present in the manure are substantially emitted in the form of carbon dioxide gas, this process being characterized in that for the acidification acid-producing bacteria are used, and that the pH of the manure to be acidified is adjusted a single time to a value lower than approximately 6.5, wherein the use of colloidal support material upon which bacteria and yeasts are fixed and the introduction of air or oxygen in the manure to such an extent that the circumstances in the manure become essentially aerobic are disclaimed. The essence of this process is that acid-producing bacteria are added to the manure or are activated in the manure, and that these bacteria can survive in this medium by feeding on substrates in the manure. Substrates on which these organisms can feed are converted into acids. These acids provide the pH reduction.

To accomplish acid production, the manure must be inoculated with a sufficient amount of the acid-producing bacteria or the manurial environment must be adapted so that the acid-producing bacteria present in the manure prevail over other manurial bacteria. In the case where acid-producing bacteria are added, generally an amount of 0.1% w/v of the inoculation material is adequate.

It is very surprising that by the use of acid-producing bacteria, ammonia can be fixed in manure and carbonates can be emitted in the form of carbon dioxide gas. The reason is that a person of ordinary skill will not expect that these bacteria can thrive in manure. This point of view in the art is clearly set forth by the secretary of the commission on ammonia measurements of the Dutch Ministry of Agriculture, ir. H.A.C. Verkerk, in Boerderij 78, no. 10, December 8, 1992, pp. 20-23. Verkerk does not expect that ammonia can be fixed under the influence of bacteria, because manure is already full of bacteria. "Those (bacteria in manure) are precisely adapted to the conditions in the manure, so other bacteria can never compete with them. The research that we are doing confirms this every time. The ammonia emission does not decrease with this type of agents."

In a preferred embodiment, day-fresh manure is treated with acid-producing bacteria. Day-fresh manure has a lower acid demand than manure which has already been stored for some days. In the present specification, the term "acid demand" indicates the number of ml 1 M citric acid required to adjust the pH of 100 ml manure to pH 5.0.

As noted, freshly produced manure has a different composition than aged manure. The following Table 1 lists the compositions of fresh pig slurry and 16-week-old pig slurry.

TABLE 1

| Composition of pig slurry | | |
|---|---|---|
| | fresh manure | old manure |
| pH | 7.25 | 8.0 |
| acid demand | 12.7 | 25 |
| VFA* | 12500 | 6000 |
| lactic acid | < 0.1 g/l | < 0.1 g/l |
| inorg. carbon | 1736 ppm | 4000 ppm |
| ammonium ions | 4010 mg/l | 5500 mg/l |
| TKN** | 8116 mg/l | 8000 mg/l |
| dry matter content | 98 g/l | 102 g/l |
| ash content | 29.5% | 32% |

*VFA: content of volatile fatty acids, for instance acetic acid, propane acid, iso-butyric acid, butyric acid, iso-valeric acid, valeric acid.
**TKN: total Kjeldahl nitrogen

Experiments have demonstrated that more (endogenous) substrates for the acidifying bacteria used according to the invention are present in freshly produced manure than in older manure. These substrates can be converted into, for instance, acetic acid, lactic acid, citric acid, etc., depending on the type of acid-producing bacteria used. Examples of microorganisms capable of producing these acids in manure are the acetic acid-generating bacteria Ruminococcus albus, Selenomonas ruminantium, Clostridium acetobutyricum and other Clostridium spp.; the propionic acid-producing bacteria Selenomonas ruminantium, Bacteroides succinogenes and Megaspheara elsdenii; the lactic acid-producing Lactobacillus plantarum, Lactobacillus brevis, Lactobacillus fermenti, other Lactobacillus spp., Streptococcus lactis and Streptococcus faecalis; (iso)butyric acid-producing bacteria such as Clostridium butyricum, Clostridium acetobutyricum and Butyrivibrio fibrisolvens; and the (iso)valeric acid generating Eubacterium cellulosolvens and Selenomonas ruminantrium.

The manure is preferably treated with lactic acid-producing bacteria. Lactic acid is relatively little volatile. More in particular, lactic acid-producing bacteria of the genus Lactobacillus, preferably of the species Lactobacillus plantarum, are used. Lactobacillus plantarum is a commercially available microorganism (Texel, Groupe Rhône-Poulenc, France and Röhm Enzymtechnologie, Germany) which is used inter alia as silage culture.

Acid-producing bacteria which are used in the process according to the invention are not as a rule capable of producing acid in the pH range of the starting manure. It will therefore be necessary to adjust the pH of the manure to be acidified a single time to a value lower than approximately 6.5, for instance pH 6.0. This can be effected with an amount of acid, for instance citric acid, but also with an amount of acid or acidified manure. Next, a sufficient amount of the selected acid-producing bacteria can be introduced into the acidified manure. By conversion of substrates present in the manure, these bacteria can augment in number and produce acid in situ.

The process according to the invention occurs in such a manner that the pH of the manure decreases to a value below pH 6.5, preferably to between 4.5 and 6.2, and is maintained in this range.

During the storage of manure on the farm, it is sufficient for the manure to be maintained at a pH of approximately 6.0, for instance a pH between 5.8 and 6.2. In this pH range, as noted before, a preponderant proportion of the ammonia is already fixed in the form of ammonium ions. Also, at this pH, the greater part of the carbonates will disappear as carbon dioxide gas from the pig slurry (pK$_a$-value of $HCO_3^-$ = 6.37). This is confirmed by determining the inorganic carbon content before and after acidification of a manure sample.

The above-mentioned pH range of less than approximately 6.2 also has the advantage that the production of butyric acid by Clostridium butyricum is limited to a minimum. This organism grows optimally in a pH range between 6.5 and 7.0. The production of butyric acid is less desirable because butyric acid, as opposed to lactic acid, is a volatile acid, which, moreover, spreads a strong, unpleasant odor in concentrated form.

4

The acid-producing bacteria which are used according to the present invention, and in particular the lactic acid bacteria of the genus <u>Lactobacillus</u>, are capable of drawing their nutrition from endogenous substrates present in day-fresh manure. The term "endogenous" indicates that the substrates have not been added, but are naturally present in the manure. By feeding fresh manure in a steady balance to the slurry which has been inoculated with lactic acid-producing bacteria, a so-called "fed-batch" system can be formed at the stock farm. This system makes use of the fact that the acid-producing bacteria can increase in number at all times. In a fed-batch system, always sufficient fresh manure is supplied, whilst a part of the manure which has a pH of approximately 6 can be withdrawn from the system. The acidified manure withdrawn from the system can subsequently be subjected to a further acidification to a pH lower than 6.0, for instance to a pH value between 4.5 and 5.5. This further acidification can be carried out either at the stock farm or at a manure processing plant. This will be discussed in more detail in the following.

As already noted above, it is very surprising that the manure in a fed-batch system can be maintained at a pH of approximately 6. Indeed, one would expect that acid-producing bacteria in the manurial medium, which has a high salt content - cattle slurry contains approx. 0.2 M salts and pig slurry contains approx. 0.4 M salts - would be ousted by competing bacteria, the reason being that generally a high salt content is an inhibitory factor for acid-producing bacteria. Moreover, experiments have shown that no specific growth-promoting substances proved necessary for the acid-producing bacteria.

To accelerate or increase the acid-production in manure, it may be desirable to introduce additional nutritional substrates for the acid-producing bacteria into the manure. Basically, this can occur in two ways.

In the first place, it is possible to introduce suitable substrates for the acid-producing bacteria, for instance sugars, such as glucose, into the manure. These substrates are called exogenous substrates.

It is also possible to make use of substances which are present in the manure (endogenous substances), but which the acid-producing bacteria cannot convert or cannot convert under the conditions in the manure. To that end, microorganisms can be added which can break down larger molecules to form substrates that are suitable for the acid-producing bacteria which are used according to the invention. Such microorganisms, which are amply present in commercially available acidifying sludge or can be obtained from a properly functioning wheat starch-acidifying reactor, produce to a great extent enzymes, such as cellulases, hemicellulases, glucanases, lipases and proteinases, which are capable of breaking down macromolecular compounds into smaller compounds. An amount of approximately 0.1% (w/v) sludge is generally adequate for macromolecular material to be rendered suitable as substrates for the acid-producing bacteria used according to the invention to a sufficient extent. The enzymes mentioned, mixed or unmixed or in combination with the macromolecule-degrading microorganisms, can also be added to manure. More in particular, in this case cellulases, hemicellulases and glucanases, alone or in combination, must be added in an amount of approximately 0.01-0.5 wt.%, calculated on the total amount of manure, whilst lipases and proteinases are added in an amount of approximately 1 kg per 100 m$^3$.

The enzymes mentioned are commercially available from numerous manufacturers. Novo-Nordisk, Denmark, markets *inter alia* Celluclast, Novozym 188 and SP359; Degomma 7083 and 7116 are commercial products of Röhm; Gist-brocades markets Gb-ML and Gb-MD.

The product DC-20 supplied by Rhône-Poulenc can also be suitably used. This product consists of enzymes and of microorganisms which produce such enzymes.

It has been found that by the use of, for instance, combinations of cellulases, glucanases, amylases, amyloglucosidases, lipases, proteinases, galactosidases and/or pectinases, a part of the substrates endogenously present in the manure can be rendered suitable for acid-producing bacteria, in particular lactic acid bacteria. In manure, such macromolecular substrates are typically present in colloidal form.

The conversion of these macromolecular endogenous compounds has a number of additional advantages. Thus, through this degradation, the viscosity of the slurry is reduced. At the same time, the so-called "sticky" or "gummy" character of the slurry, which is particularly evident in slurry which contains high concentrations of macromolecular compounds, is reduced. These advantages are manifest in particular when the slurry is separated into a solid and a liquid phase.

It has advantages to use, instead of exogenous substrates for the acid-producing bacteria, for instance sugars, macromolecular compounds, in particular carbohydrates, in combination with microorganisms or enzymes converting such compounds. Such macromolecular compounds are often waste products and hence much cheaper than the exogenous substrates referred to.

Suitable carbohydrate-containing substances, which can suitably be used as additives, are ground grains and pulse crops, various side products of flour milling industries (feed grits, bran, wheat evaporation concentrate, etc.), silage maize, maltodextrins, glucose syrups, sugars, molasses and vinasse, etc. Further, it is possible to use products from the milk industry as suitable nutrients for the acid-producing bacteria, such a lactose and acid whey.

Instead of adding specific acid-producing bacteria, it is possible to activate acid-producing bacteria which are naturally present in manure. By lowering the pH of the manure from 7.2-8.0 to a value between for instance 5.0 and 6.0 and by ensuring that a large amount of suitable substrate is present in the manure, it is possible to cause the acid-producing bacteria mentioned to prevail over other bacteria in the manure. The large amount of suitable substrate can be provided either by adding substrate or by adding one or more types of enzymes which degrade macromolecular compounds into a suitable substrate.

As noted above, in a fed-batch system a part of the acidified manure is removed. It has been found that the acid demand of manure, once it has been acidified, becomes considerably lower than the acid demand of non-acidified manure. More in particular, pig slurry of a pH of 7.0 has an acid demand which is 2.5 times as large as the acid demand of manure whose pH has run up again to 7.0 but which had been acidified to a pH of 6.1. Determining the acid demand of slurry is thus a good indication of the progress of the acidification, or, more particularly, of the removal of buffers, for instance the $HCO_3^-/CO_3^{2-}$ buffer, in manure. As was established, this progress of the acidification cannot be determined by a pH measurement.

The pH stability of acidified manure appears to be strongly dependent on the pH set. As manure is acidified, the carbonate present therein is converted into water and carbon dioxide, which escapes from the manure. If, upon acidification to a given pH, not all of the carbonate has been converted, the pH will in the course of time increase as a result of the formation of carbon dioxide and water from the acid $HCO_3^-$. If manure is acidified to a pH lower than 5.5, the carbonate buffer has been converted completely into water and carbon dioxide and the pH with regard to the buffer is stabilized.

At the stock farm, utilizing the process according to the invention, manure will be adjusted to and maintained at a pH of approximately 6. This acidified manure can subsequently be carried off to a manure processing plant. At this plant, the manure is first brought to a pH of approximately 5.0-5.5 for further treatment. This further acidification can be carried out by the use of acid-producing microorganisms, but also by adding a strongly mineral acid.

Manure from which substantially all carbon dioxide has been removed whilst ammonia has been fixed in the form of ammonium ions, can suitably be subjected to a mechanical separation. In this mechanical separation, the solid constituents are separated from the manurial liquid. This separation process can be carried out in known manners, for instance through stepped use of coarse screens, hydrocyclones, separators and decanting devices.

If the pH of the acidified manure withdrawn from the fed-batch system is to be lowered further than to a pH lower than 5.0, the use of substrate increases comparatively, and the rate of the pH reduction decreases. Partly on the basis of the given that at a pH of 5.0 the greater part of the carbon dioxide will have disappeared, whilst the ammonia is present practically completely in the form of ammonium ions, any further pH reduction than a pH of approximately 5 does not seem useful.

It has been found that the addition of yeast extract and tryptone as additives at the start-up of the process according to the invention stimulates the growth of the lactic acid bacteria and increases the rate and the efficiency of the lactic acid production.

The invention will now be further elucidated in the following Examples.

Example 1

Pig slurry (dry matter content 102 g/l, 31.5% ash, Kjeldahl nitrogen content 7928 mg N/l, 5533 mg ammonium ions per liter and a VFA content of 8024 mg/l, pH 8.0), to which 10 g/l glucose was added, was acidified to pH 6.0 with citric acid. To effect lactic acid production, 5 liter of this manure was inoculated with 0.1% w/v of the microorganism Lactobacillus plantarum. Then the manure was fermented at ambient temperature (approx. 25°C), whilst during the fermentation a few times additional glucose was added, which is indicated in the Table below.

A similar manure sample, to which further 10 g/l yeast extract and 10 g/l tryptone had been added, was subjected to the same fermentation.

Upon achieving a pH of 4.8, a part of the acidified manure was removed, whereafter fresh manure was administered to a pH of 6.0. The volume was supplemented to 5 liter with manure acidified to pH 6.0 (citric acid). Thus, after addition of 30 g/l glucose, a second lactic acid fermentation was started, followed by a third one according to the procedure described. During these fermentations, no re-inoculation occurred. In both fermentation systems, the pH reduction, glucose consumption, lactic acid production and the growth of lactic acid bacteria were monitored.

De pH reduction occurred slower in the case where the lactic acid bacteria had only additional glucose at their disposal during the start-up of the process than in the presence of additional yeast extract and tryptone. This clearly appears from Tables 2 en 3.

6

## TABLE 2

Results of the microbial acidification of pig slurry
upon addition of glucose as substrate for Lactobacillus plantarum.

| Time (h) | pH | Glucose (g/1) | Lactic acid (g/1) | Efficiency (%) | Lactobacillus (number/ml) | $NH_4^+$ (mg N/1) | Dry matter/ash (g/1 and %) |
|---|---|---|---|---|---|---|---|
| First fermentation: | | | | | | | |
| 0 | 6.04 | 10 | 0.2 | | $39 \cdot 10^6$ | 5533 | 110/26.8 |
| 18 | 5.93 | | 0.4 | | | 5533 | |
| 24 | 5.83 | 5 | 1.6 | | | | |
| 42 | 5.45 | | 6.5 | | | 5300 | |
| 49 | 5.32 | | 8.2 | | | | |
| 56 | 5.18 | | 10.2 | | | | |
| 66 | 5.04 | | 11.2 | | | | |
| 73 | 4.99 | 10 | 15.8 | | | | |
| 90 | 4.84 | | 23.4 | 92.8 | $13 \cdot 10^7$ | 4600 | 138/21.3 |
| Second fermentation: | | | | | | | |
| 92 | 6.13 | 30 | 12.3 | | $71 \cdot 10^6$ | 5300 | 135/22.2 |
| 161 | 4.93 | 10 | 30.7 | 61.3 | | | |
| 167 | 4.89 | | | | $53 \cdot 10^7$ | 5358 | 144/19.9 |
| Third fermentation | | | | | | | |
| 168 | 6.06 | 36 | 15.7 | | $27 \cdot 10^7$ | 5183 | 137/21.2 |
| 259 | 4.86 | | 31.6 | 44.1 | $13 \cdot 10^8$ | 6670 | 146/18.4 |

EP 0 612 704 B1

**TABLE 3**

Results of the microbial acidification of pig slurry upon addition of glucose, yeast extract (10 g/l) and tryptone (10 g/l) as substrate for Lactobacillus plantarum.

| Time (h) | pH | Glucose (g/l) | Lactic acid (g/l) | Efficiency (%) | Lactobacillus (number/ml) | NH$_4^+$ (mg N/l) | Dry matter/ash (g/l and %) |
|---|---|---|---|---|---|---|---|
| **First fermentation:** | | | | | | | |
| 0 | 6.00 | 10 | 0.3 | | $44 \cdot 10^6$ | 4834 | 151/21.1 |
| 18 | 5.88 | | 2.1 | | | 4776 | |
| 24 | 5.43 | 10 | 8.1 | | | | |
| 42 | 4.99 | 10 | 18.5 | | | 3844 | |
| 49 | 4.78 | 5 | 24.6 | | | | |
| 54 | 4.74 | | | | | | |
| 55 | 4.73 | | 26.3 | 75.1 | $31 \cdot 10^8$ | 5416 | 153/20.2 |
| **Second fermentation:** | | | | | | | |
| 57 | 5.99 | 13 | 12.0 | | $16 \cdot 10^8$ | 5475 | 138/22.1 |
| 67 | 5.21 | 10 | 15.1 | | | | |
| 74 | 4.92 | 10 | 25.6 | | | | |
| 91 | 4.64 | | 42.7 | 93.0 | $11 \cdot 10^8$ | 5241 | 147/20.9 |
| **Third fermentation:** | | | | | | | |
| 93 | 5.97 | 40 | 20.8 | | $60 \cdot 10^7$ | 5300 | 143/20.7 |
| 161 | 4.51 | | 51.7 | 77.3 | $37 \cdot 10^8$ | 5067 | 150/19.4 |

The addition of yeast extract and tryptone yielded a stronger growth of the number of lactic acid bacteria. The number of lactobacilli was approximately equal at the outset of the two fermentations. Without additional additives, the number of lactic acid bacteria increased gradually.

Upon addition of additional nutrients, the number of lactic acid producers increased strongly during the first fermentation to a maximum of approximately $10^9$/ml. Then the number of lactic acid bacteria stabilized at

8

this high level. A consequence of this considerable growth of the lactic acid bacteria in the first fermentation was that in the start-up situation of the second fermentation more glucose had to be administered to realize a pH reduction comparable to that in the fermentor with the manure sample without yeast extract and tryptone. The ammonia content of the pig slurry remained reasonably constant during the fermentations. No volatilization in the form of $NH_3$ occurred but binding in the form of $NH_4^+$.

To a sample of 100 ml acidified manure of pH 4.7, 40 ml fresh pig slurry (pH 8.0) could be added to realize a pH of 6.0 at the beginning of the second (and also third) fermentation.

Example 2

5 liter pig slurry (dry matter content 83 g/l, 35.1% ash, Kjeldahl nitrogen content 8740 mg N/l, 5950 mg ammonium ions per liter, a VFA content of 4260 mg/l, pH 8.0) was acidified with citric acid to pH 6.0. 10 g/l wheat starch was added. Then 0.1 wt.% of a sludge mixture of acidifying bacteria was added. This sludge mixture of acidifying bacteria consisted of aerobic sludge from the treatment plant Beilen, the Netherlands, of which the influent comprises *inter alia* waste water from the dairy industry; anaerobic sludge from a wheat starch-acidifying reactor and anaerobic sewage fermentation sludge in a ratio of 1:1:1.

This sludge mixture caused the pH in the fermentor to decrease from pH 6.0 to 5.5 by acidification of the starch. Then an inoculation of L. plantarum was added to effect a further pH reduction.

When the pH of the fermenting manure had reached a value of approximately 4.8, a part of the acidified manure was replaced with fresh manure by an analogous procedure to that according to Example 1. Here, acidifying sludge of Lactobacillus plantarum was not added again. Each time the pH reduction stagnated, more starch was added.

Table 4 shows the results of this fermentation.

## TABLE 4

Results of the microbial acidification of pig slurry upon addition of wheat starch as substrate for an acidifying sludge mixture and *Lactobacillus plantarum*.

| Time (number/ml) | pH | Wheat starch (mg N/l) | Lactic acid/starch (g/l and %) | Efficiency (h) | Lactobacillus | $NH_4^+$ (g/l) | Dry matter/ash (g/l) (%) |
|---|---|---|---|---|---|---|---|
| **First fermentation:** | | | | | | | |
| 0 | 5.84 | 10 | 0.1 | | $>10^7$ | 4910 | 112/23.9 |
| 22 | 5.73 | | | | | | |
| 93 | 5.53 | 5 | 3.7 | | | | |
| 117 | 5.47 | | 5.5 | 36.7 | $31 \cdot 10^7$ | | |
| 120 | 5.49 | 10+LP | 6.0 | | $12 \cdot 10^8$ | | |
| 142 | 5.19 | 10 | 13.9 | | | | |
| 164 | 5.01 | | 19.0 | | | | |
| 191 | 5.03 | 10 | 20.9 | | | | |
| 241 | 4.87 | 5 | 23.6 | | | | |
| 264 | 4.78 | | 26.4/4.0 | 58.3 | $47 \cdot 10^7$ | 4875 | |
| **Second fermentation:** | | | | | | | |
| 266 | 6.02 | 10 | 14.0/1.5 | | | | |
| 284 | 5.88 | | 14.1 | | | 5323 | |
| 310 | 5.52 | | 17.2 | | $29 \cdot 10^7$ | | |
| 316 | 5.47 | 5 | 17.1 | | | | |
| 332 | 5.24 | | 18.9 | | | | |
| 339 | 5.19 | 5 | 19.3 | | | | |
| 357 | 5.19 | 10 | 20.8 | | | | |
| 383 | 5.05 | | 23.4 | | $83 \cdot 10^8$ | 5507 | |
| 431 | 4.76 | | 32.5/1.1 | 61.7 | | | |

Per 100 ml acidified manure of a pH of 4.7, 80 ml of fresh pig slurry (pH 8,0) could be added to achieve a pH of 6.0. The curves of the ammonium concentration, dry matter and ash content exhibit identical patterns to those in the fermentations with glucose. In addition to the number of lactic acid

EP 0 612 704 B1

bacteria, also an anaerobic germ count was determined in de fermentors, in the manner as described in Mossel and Jacobs-Reitsma, Mikrobiologisch onderzoek van levensmiddelen ("Microbiological research of foodstuffs"), 3rd edition (1990), P.C. Noordervliet B.V. Zeist. It appeared that the greater part of the anaerobic microorganisms consisted of lactic acid bacteria.

Example 3

Manure samples which were acidified to pH values varying between 6.5 and 4.5 by lactic acid bacteria of the species L. plantarum, were boiled for some hours. Here, it was determined that in manure which had been acidified to a pH value lower than 6, a very minor release of ammonia and lactic acid occurred. In addition, also few volatile fatty acids were detected. Volatile fatty acids are detected with the aid of a gas chromatograph (column Chromosorb 101 80-100 mesh, detector Flame Ionisation Detector, carrier gas nitrogen gas saturated with formic acid, column temperature 155°C, injector temperature 185°C, detector temperature 250°C).

Example 4

In a manure vault of 350 m$^3$ which was built under a cow shed, 50 m$^3$ cattle slurry of a pH of 7.7 was disposed. In the shed, 25 cows were present. The manure vault was equipped with a conventional mixing device which could be driven with the aid of a tractor.

This amount of cattle slurry was adjusted to a pH of 6.5 by adding microbially acidified pig slurry of pH 4.8.

For 4 months, pH measurements were performed. If the manure was mixed well at least once a week, the pH always varied between 6.2 and 6.5. If no proper mixing took place, it was found that the pH could run up to approximately 6.8 at certain points in the manure vault.

**Claims**

1. A process for acidifying manure, in particular slurry, in which the ammonia present is substantially fixed in the manure and the carbonates present in the manure are substantially discharged in the form of carbon dioxide gas, characterized in that for acidification acid-producing bacteria are used, and that the pH of the manure to be acidified is adjusted a single time to a value lower than approximately 6.5, wherein the use of colloidal support material upon which bacteria and yeasts are fixed and the introduction of air or oxygen in the manure to such an extent that the circumstances in the manure become essentially aerobic are disclaimed.

2. A process as claimed in claim 1, characterized in that day-fresh manure is treated with acid-producing bacteria.

3. A process as claimed in claim 1 or 2, characterized in that the manure is treated with lactic acid-producing bacteria.

4. A process according to any one of the preceding claims, characterized in that the manure is treated with lactic acid-producing bacteria of the genus Lactobacillus, preferably of the species Lactobacillus plantarum.

5. A process according to any one of the preceding claims, characterized in that the treatment occurs in such a manner that the pH of the manure decreases to a value between 4.5 and 6.2 and is maintained in this range.

6. A process according to any one of the preceding claims, characterized in that it is carried out in a "fed-batch" system.

7. A process according to any one of the preceding claims, characterized in that substrates for acid-producing bacteria are added to the manure.

8. A process as claimed in claim 8, characterized in that sugars, in particular glucose, are added.

11

9. A process according to any one of the preceding claims, characterized in that also microorganisms or enzymes are added, which are capable of breaking down macromolecular substrates into substrates for the acid-producing bacteria.

10. A process as claimed in 9, characterized in that also macromolecular substrates are added to the manure.

**Patentansprüche**

1. Verfahren zur Ansäuerung von Mist, insbesondere Flüssigmist, wobei der vorhandene Ammoniak im wesentlichen im Mist gebunden wird und die im Mist vorhandenen Carbonate im wesentlichen in Form von Kohlendioxyd abgeführt werden, dadurch gekennzeichnet, daß zur Ansäuerung säurebildende Bakterien verwendet werden und daß der pH-Wert des anzusäuernden Mistes einmalig auf einen Wert unter etwa 6,5 eingestellt wird, wobei die Verwendung eines kolloidalen Trägermaterials, auf dem Bakterien und Hefen gebunden sind, und die Einführung von Luft oder Sauerstoff in den Mist derart, daß die Bedingungen im Mist im wesentlichen aerob werden, ausgeschlossen werden.

2. Verfahren nach Anspruch 1, dadurch gekennzeichnet, daß täglich frischer Mist mit säurebildenden Bakterien behandelt wird.

3. Verfahren nach Anspruch 1 oder 2, dadurch gekennzeichnet, daß der Mist mit milchsäurebildenden Bakterien behandelt wird.

4. Verfahren nach einem der vorhergehenden Ansprüche, dadurch gekennzeichnet, daß der Mist mit milchsäurebildenden Bakterien vom Genus Lactobacillus, vorzugsweise von der Spezies Lactobacillus plantarum, behandelt wird.

5. Verfahren nach einem der vorhergehenden Ansprüche, dadurch gekennzeichnet, daß die Behandlung derart erfolgt, daß der pH-Wert des Mistes auf einen Wert zwischen 4,5 und 6,2 sinkt und in diesem Bereich aufrechterhalten wird.

6. Verfahren nach einem der vorhergehenden Ansprüche, dadurch gekennzeichnet, daß es in einem "fed-batch"-System durchgeführt wird.

7. Verfahren nach einem der vorhergehenden Ansprüche, dadurch gekennzeichnet, daß dem Mist Substrate für säurebildende Bakterien zugesetzt werden.

8. Verfahren nach Anspruch 8, dadurch gekennzeichnet, daß Zuckerarten, insbesondere Glucose, zugesetzt werden.

9. Verfahren nach einem der vorhergehenden Ansprüche, dadurch gekennzeichnet, daß auch Mikroorganismen oder Enzyme zugesetzt werden, die makromolekulare Substrate zu Substraten für die säurebildenden Bakterien abbauen können.

10. Verfahren nach Anspruch 9, dadurch gekennzeichnet, daß dem Mist auch makromolekulare Substrate zugesetzt werden.

**Revendications**

1. Procédé d'acidification de lisier, en particulier de fumier, dans lequel l'ammoniac présent est essentiellement fixé dans le lisier et les carbonates présents dans le lisier sont essentiellement évacués sous la forme de gaz de dioxyde de carbone, caractérisé en ce que des bactéries productrices d'acide sont utilisées pour l'acidification et en ce que le pH du lisier à acidifier est réglé une seule fois à une valeur inférieure à environ 6,5, dans lequel sont revendiquées l'utilisation d'un matériau de support colloïdal sur lequel des bactéries et levures sont fixées et l'introduction d'air ou d'oxygène dans le lisier dans une mesure telle que les circonstances dans le lisier deviennent essentiellement aérobies.

**2.** Procédé selon la revendication 1, caractérisé en ce que le lisier du jour est traité avec des bactéries productrices d'acide.

**3.** Procédé selon la revendication 1 ou 2, caractérisé en ce que le lisier est traité avec des bactéries productrices d'acide lactique.

**4.** Procédé selon l'une quelconque des revendications précédentes, caractérisé en ce que le lisier est traité avec des bactéries productrices d'acide lactique du genre <u>Lactobacillus</u>, de préférence de l'espèce <u>Lactobacillus plantarum</u>.

**5.** Procédé selon l'une quelconque des revendications précédentes, caractérisé en ce que le traitement intervient d'une manière telle que le pH du lisier diminue pour atteindre une valeur de 4,5 à 6,2 et est maintenu dans cette gamme.

**6.** Procédé selon l'une quelconque des revendications précédentes, caractérisé en ce qu'il est exécuté dans un système d'alimentation par lots.

**7.** Procédé selon l'une quelconque des revendications précédentes, caractérisé en ce que des substrats pour des bactéries productrices d'acide sont ajoutés au lisier.

**8.** Procédé selon la revendication 8, caractérisé en ce que des sucres, en particulier du glucose, sont ajoutés.

**9.** Procédé selon l'une quelconque des revendications précédentes, caractérisé en ce que des microorganismes ou enzymes capables de dégrader des substrats macromoléculaires en substrats pour des bactéries productrices d'acide sont ajoutés.

**10.** Procédé selon la revendication 9, caractérisé en ce que des substrats macromoléculaires sont également ajoutés au lisier.